# DEMANDE DE BREVET EUROPEEN

(11) **EP 4 067 218 A1**
(43) Date de publication de la demande: **05.10.2022**
(21) Numéro de dépôt: 22165190.4
(22) Date de dépôt: 29.03.2022
(51) Int. Cl.: B62J 43/16, B62J 50/30, B62J 9/14

(54) **VÉHICULE LÉGER ÉLECTRIQUE À BATTERIE INTERCHANGEABLE COMPORTANT UN LOGEMENT DE RÉCEPTION DE BATTERIE VENTILÉ**

(30) Priorité: 30.03.2021 FR 2103245
(71) Demandeur: ZE Way, 75001 Paris (FR)
(72) Inventeur: ROSTAN, Philipp Johannes, 545085 SINGAPOUR (SG); SINÉUS, Kévin, 75001 PARIS (FR)
(74) Mandataire: Santarelli

(57) **Abrégé**

L'invention porte sur un véhicule léger à propulsion électrique tel qu'un scooter, ledit véhicule comportant un logement (3) de réception de batterie pour la réception d'une batterie électrique de propulsion du véhicule. La batterie est interchangeable par un utilisateur du véhicule. Le logement (3) de réception de batterie comporte une face ouverte (9) permettant l'introduction de la batterie et est délimité par des parois latérales (8) et une paroi de fond. Le logement de réception de batterie comporte une ouverture d'entrée d'air (10) ménagée dans l'une des parois latérales et une ouverture de sortie d'air (11) ménagée dans l'une des parois latérales.

Le logement de réception de batterie comporte une structure mécanique interne ménageant un espace permettant l'écoulement d'air entre les parois latérales et une batterie présente dans le logement de réception de batterie depuis l'ouverture d'entrée d'air (10) jusqu'à l'ouverture de sortie d'air (11) tout en maintenant la batterie en position dans le logement de réception de batterie dans un plan perpendiculaire à la direction d'introduction de la batterie.

## Description

La présente invention concerne le domaine des véhicules électriques, et plus particulièrement le domaine des véhicules électriques légers, notamment des véhicules bicycles, tricycles ou quadricycles légers, et les solutions de mobilités similaires.

Une application préférentielle de la présente invention concerne les scooters électriques.

L'invention porte plus particulièrement sur les véhicules électriques qui embarquent au moins une batterie pour fournir l'électricité pour l'alimentation d'un ou plusieurs moteurs électriques de propulsion, et qui sont configurés pour que l'utilisateur puisse échanger lui-même la (ou les) batterie lorsque cette dernière est déchargée.

De manière générale, l'échange d'une batterie peut consister, pour un utilisateur, à se rendre à proximité d'un point d'échange et de recharge d'un réseau de stations d'échange de batterie, à retirer la batterie déchargée de son véhicule, à échanger, dans un dispositif adapté pouvant être appelé par exemple « station » ou « station d'échange », la batterie déchargée contre une batterie chargée, et à placer la batterie chargée ainsi récupérée dans son véhicule.

Ce type de réseau de stations d'échange de batteries se développe actuellement, et se révèle particulièrement judicieux en milieu urbain. En effet, les véhicules visés, notamment les scooters, sont particulièrement bien adaptés à s'y déplacer, les distances à parcourir sont relativement faibles, et il est aisé d'y constituer un réseau de stations d'échange de batteries selon un maillage géographique cohérent et pouvant être utilisé par de nombreux utilisateurs.

Bien que l'invention soit applicable préférentiellement à des véhicules utilisant de tels réseaux de stations d'échange de batteries, elle est applicable de manière générale à tout véhicule dont la batterie peut être extraite du véhicule par l'utilisateur, par exemple en vue de sa recharge.

Dans les véhicules légers à propulsion électrique, l'échauffement que peut subir la batterie lors de son utilisation peut avoir des conséquences néfastes.

L'utilisation des batteries à une température élevée résulte en une diminution de la durée de vie des batteries par la réduction du nombre de cycles de charges et de décharges à performance constante, ou autrement dit, par une perte de capacité de la batterie accélérée dans le temps.

Pour éviter tout emballement thermique pouvant résulter en une dégradation de la batterie, voire dans des situations extrêmes en un départ de feu, le système de gestion de la batterie d'un véhicule électrique est généralement configuré pour interrompre la décharge de la batterie lorsque la température de la batterie est au-dessus d'un seuil donné. Le véhicule et son utilisateur sont alors immobilisés. De même, le système de gestion de la batterie d'un véhicule électrique est également généralement configuré pour interrompre la charge de la batterie lorsque la température de la batterie est au-dessus d'un seuil donné. Ainsi, la charge de la batterie peut être interdite dans les minutes qui suivent une utilisation intensive de cette batterie (i.e. une décharge prolongée sous un fort courant). Une autre conséquence peut être la perte momentanée d'un mode dit de régénération en décélération, c'est-à-dire de récupération d'énergie électrique lors d'un freinage. La perte de cette fonction réduit l'efficacité énergétique du véhicule, et peut être inconfortable voir perturbante pour l'utilisateur habitué à l'emploi de ce mode sur son véhicule.

Afin de limiter réchauffement des batteries dans les véhicules à propulsion électrique, diverses solutions ont été envisagées dans l'état de la technique. Le principe d'un tel refroidissement consiste généralement à apporter de l'air extérieur jusqu'à la batterie, de manière passive ou forcée, et à faire circuler de l'air entre les éléments de la batterie.

Par exemple, dans un scooter électrique, le document EP2479092 propose de refroidir une batterie située sous le plancher du scooter en aspirant de l'air à l'arrière du tablier (tableau avant) du scooter. Le document FR2735076 propose de prélever de l'air sur la face avant d'un scooter électrique et de l'acheminer jusqu'à une batterie par un conduit situé dans le plancher du véhicule. Le document EP2574530 présente une prise d'air en partie haute d'un carénage d'une motocyclette électrique. Néanmoins, les architectures proposées dans ces documents sont complexes, et aucune n'est particulièrement adaptée au refroidissement d'une batterie dans un scooter configuré pour permettre un échange de batterie rapide par l'utilisateur.

En particulier, aucune configuration connue n'est particulièrement adaptée aux scooters et véhicules similaires adaptés à un échange simple et rapide de la batterie électrique de propulsion. Dans ce type de véhicules, il est nécessaire que l'extraction et la mise en place de la batterie soient les plus simples possibles.

En effet, malgré les avancées récentes dans le domaine des batteries, le poids d'une batterie de propulsion d'un scooter électrique demeure relativement important, par exemple de l'ordre de dix kilogrammes (selon l'autonomie souhaitée pour le véhicule), de sorte que toute mesure permettant d'en faciliter la manipulation est souhaitable. En outre, l'échange de la batterie doit être le plus rapide possible. Enfin, les étapes de l'extraction et de la mise en place d'une batterie doivent être simples et intuitives, et ne doivent présenter aucune complexité technique afin d'être accessible à tout utilisateur, avec la meilleure ergonomie possible. En particulier, la fixation de la batterie doit être simple, elle ne doit nécessiter, autant que possible, aucun verrouillage complexe.

A cette fin, la Demanderesse a développé une batterie de forme générale prismatique droite, en l'occurrence parallélépipédique, comportant sur une face une poignée de portage et manipulation, et sur une face opposée un connecteur électrique. La batterie est ainsi adaptée à être insérée dans un logement de réception de forme correspondante ménagé dans le véhicule recevant la batterie. Le logement comporte sur son fond un connecteur adapté à coopérer par enfichage avec celui de la batterie, de sorte à assurer une connexion électrique entre la batterie et le système électrique du véhicule. Idéalement, la connexion peut être réalisée sous le seul effet du poids de la batterie, par exemple dans une configuration préférentielle dans laquelle la batterie est logée sensiblement verticalement. Dans une telle configuration, la batterie coulisse sous son propre poids dans le logement de réception du véhicule et s'enfiche avec le connecteur électrique du logement. Mais le logement forme de fait un confinement thermique de la batterie, de sorte qu'une solution de refroidissement de la batterie adaptée à cette configuration serait particulièrement souhaitable.

La présente invention vise à résoudre au moins l'un des problèmes précités.

Ainsi, la présente invention porte sur un véhicule léger à propulsion électrique tel qu'un scooter, ledit véhicule comportant un logement de réception de batterie pour la réception d'une batterie électrique adaptée à fournir l'énergie nécessaire à la propulsion du véhicule. Ce véhicule est configuré de sorte que la batterie est interchangeable par un utilisateur du véhicule, le logement de réception de batterie comportant une face ouverte permettant l'introduction de la batterie selon une direction d'introduction de la batterie et étant en outre délimité par des parois latérales et une paroi de fond. Dans ce véhicule le logement de réception de batterie comporte au moins une ouverture d'entrée d'air ménagée dans l'une des parois latérales et au moins une ouverture de sortie d'air ménagée dans l'une des parois latérales.

Le logement de réception de batterie comporte une structure mécanique interne ménageant un espace permettant l'écoulement d'air entre les parois latérales et une batterie présente dans le logement de réception de batterie depuis l'ouverture d'entrée d'air jusqu'à l'ouverture de sortie d'air tout en maintenant la batterie en position dans le logement de réception de batterie dans un plan perpendiculaire à la direction d'introduction de la batterie.

Le véhicule ainsi visé dans l'invention, est un véhicule léger, par exemple bicycle, tricycle ou quadricycle permettant l'échange de sa batterie de propulsion par son utilisateur. Cela permet notamment d'échanger une batterie déchargée par une batterie chargée récupérée dans une station d'échange de batterie appropriée.

Sur ce type de véhicule, il est proposé une configuration du logement de réception de batterie permettant une circulation d'air autour de la batterie, en vue de son refroidissement, tout en garantissant un bon maintien en position de la batterie dans le logement de réception. Il est en particulier proposé de doter le logement de réception de batterie d'une structure mécanique, c'est-à-dire d'éléments physiques, permettant de créer un espace pour la circulation de l'air entre la batterie et la paroi interne de son logement de réception. Cette circulation d'air s'effectue entre une ou plusieurs ouvertures d'entrée d'air, et une ou plusieurs ouvertures de sortie d'air, ménagées dans les parois latérales du logement de réception. Cette circulation est préférentiellement provoquée par le roulage du véhicule (c'est-à-dire son mouvement d'avancée), ce qui est généralement pertinent car les forts courants de décharge de la batterie coïncident généralement avec une vitesse élevée du véhicule. Il en est de même des forts courants de recharge par régénération à la décélération. Cela réduit le risque d'emballement thermique. Cela permet d'augmenter la durée de vie de la batterie, ce qui est primordial dans un modèle économique fondé sur l'échange des batteries de propulsion. En outre, le refroidissement de la batterie limite le risque d'indisponibilité du véhicule pour son usage (du fait du temps de refroidissement imposé lorsque la batterie est jugée trop chaude), et limite le risque de rendre la régénération au freinage de la batterie inopérante.

Le logement de réception de batterie peut être en tout ou partie ménagé sous une selle dudit véhicule.

La présente invention s'intéresse en particulier à l'architecture de véhicules dans laquelle la batterie est située sous la selle du véhicule, typiquement sous la selle du scooter. L'art antérieur connu ne divulgue en effet aucun système de refroidissement adapté à cette architecture particulière.

La structure mécanique du logement de réception de batterie peut comporter des nervures d'espacement s'étendant sur au moins l'une des parois latérales du logement de réception de batterie sensiblement selon la direction d'introduction de la batterie.

Tout ou partie des nervures de la structure mécanique guide ainsi la batterie lors de son introduction et de son retrait du logement de réception.

La structure mécanique du logement de réception de batterie peut comporter en outre des nervures de renfort non-parallèles aux nervures d'espacement.

Les nervures présentes dans le logement de réception participent ainsi également au renforcement mécanique et à la rigidité du logement de réception de batterie.

Les nervures d'espacement et, le cas échéant, les nervures de renfort, peuvent définir un parcours d'écoulement de l'air autour de la batterie depuis l'ouverture d'entrée d'air jusqu'à l'ouverture de sortie d'air.

La structure mécanique présente dans le logement peut ainsi avoir, outre la fonction d'espacement entre la batterie et les parois latérales du logement de réception de batterie, une fonction de guidage de l'air afin d'optimiser le refroidissement de la batterie. Par exemple, ce guidage peut permettre de définir un parcours de l'air autour de la batterie qui maximise la surface de la batterie refroidie par l'air qui circule dans le logement de réception de batterie.

La structure mécanique du logement de réception de batterie peut comporter au moins un décrochement formé dans au moins l'une des parois latérales du logement de réception de batterie.

Le logement de réception de batterie peut comporter deux ouvertures d'entrée d'air ménagées respectivement dans des parois latérales opposées du logement de réception de batterie.

Cette disposition optimise l'entrée d'air dans le logement de réception en profitant de la symétrie générale du véhicule.

Le logement de réception de batterie peut comporter, sur sa face ouverte, un couvercle ménageant une ouverture correspondant, à un jeu fonctionnel près, à une section transversale de la batterie. Dans ce cas, le couvercle peut former tout ou partie de ladite structure mécanique.

Le couvercle ainsi constitué permet la fermeture, en partie haute (au niveau de la face ouverte du logement de réception de batterie), de l'espace dans lequel circule l'air autour de la batterie. Le cas échéant, ce couvercle réalise le maintien ou participe au maintien de la batterie perpendiculairement à sa direction d'introduction.

L'ouverture de sortie d'air du logement de réception de batterie peut être formée au travers d'une des parois latérales situées vers l'arrière, selon une direction d'avancée courante du véhicule.

Le véhicule peut comporter un système aéraulique configuré pour capter un flux d'air généré par un mouvement d'avancée du véhicule et à le guider au travers de chaque ouverture d'entrée d'air du logement de réception de batterie.

Ce système aéraulique peut comporter une écope sur chaque ouverture entrée d'air. Chaque écope peut être formée ou rapportée sur une surface extérieure du logement de réception de batterie.

Le système aéraulique peut avoir diverses constitutions et diverses configurations. Selon des modes de réalisation préférés, il comporte une écope positionnée dans un flux d'air généré autour du véhicule ou dans le véhicule (par exemple sous un élément de carrosserie) par l'avancée du véhicule, pour capter tout ou partie de ce flux d'air. L'écope peut être positionnée directement au contact du logement de réception de batterie, si un flux d'air peut être capté à proximité immédiate de ce logement, ou être reliée à l'ouverture d'entrée d'air via un conduit d'air. Un tel dispositif permet également d'obtenir un refroidissement par air efficace de la batterie, sans recourir à un système de circulation forcée de l'air tel qu'un ventilateur électrique.

Le système aéraulique peut comporter au moins un filtre configuré pour empêcher l'entrée de particules ou d'eau dans le logement de réception de la batterie.

Le filtre, qui peut prendre diverses formes (grille, filtre en papier, en textile, en mousse, système de chicanes, etc.), évite toute salissure excessive et toute dégradation du logement de réception de batterie et de la batterie qu'il contient.

Le véhicule peut être un scooter comportant un carter de roue arrière, le système aéraulique étant ménagé au moins en partie dans ledit carter de roue arrière de sorte à capter un flux d'air s'écoulant sous et/ou dans ledit carter de roue arrière lorsque le véhicule avance.

La demanderesse a identifié que cette zone de captation d'un flux d'air est particulièrement pertinente dans un scooter électrique à batterie interchangeable par l'utilisateur du scooter, en particulier lorsque la batterie est située sous la selle du scooter. Un flux d'air frais peut être capté dans cette zone, à proximité du logement de réception de batterie. L'écope (ou les écopes) peut être disposée dans cette zone sans modification importante de l'architecture du scooter. En outre, cette écope est peu visible, et ne perturbe en rien l'esthétique du véhicule.

Il est ainsi proposé une configuration de système de refroidissement simple et efficace pour les scooters électriques à batterie interchangeable.

D'autres particularités et avantages de l'invention apparaîtront encore dans la description ci-après.

Aux dessins annexés, donnés à titre d'exemples non limitatifs :
- la figure 1 représente, selon une vue tridimensionnelle schématique, un scooter électrique d'un type pouvant faire l'objet de l'invention ;
- la figure 2 représente, selon une vue schématique en trois dimensions, un logement de réception de batterie pouvant être utilisé dans un mode de réalisation de l'invention ;
- la figure 3 représente selon une vue de dessus un logement de réception de batterie équipant un véhicule conforme à un mode de réalisation de l'invention dans lequel une batterie est mise en place ;
- la figure 4 représente selon une vue analogue à celle de la figure 2 un autre exemple de logement de réception de batterie pouvant être mis en oeuvre dans un mode de réalisation de l'invention ;
- la figure 5 illustre selon une vue tridimensionnelle schématique un logement de réception de batterie et son environnement immédiat dans un véhicule conforme à un mode de réalisation de l'invention ;
- la figure 6 illustre selon une autre vue tridimensionnelle schématique le logement de réception de batterie et son environnement immédiat dans un véhicule conforme à un mode de réalisation de l'invention ;
- la figure 7 représente un scooter analogue à celui de la figure 1 comportant le dispositif de refroidissement de batterie illustré en référence aux figures 2 à 6.

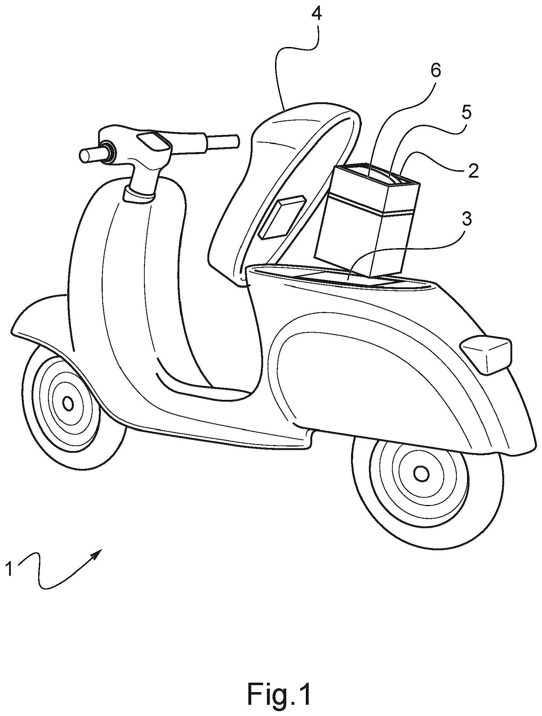

La figure 1 représente, selon une vue tridimensionnelle, un scooter électrique comportant un dispositif de réception d'une batterie selon un mode de réalisation de l'invention.

Le scooter 1 est un scooter à propulsion électrique. A cette fin, une batterie 2 est destinée à fournir l'énergie nécessaire à la propulsion du scooter 1. En particulier, la batterie alimente un système d'électronique de puissance qui assure l'alimentation électrique d'un moteur électrique, qui permet de propulser le scooter.

Le scooter 1 comporte un logement 3 pour la réception et le branchement de la batterie 2. Le logement 3 est très facile d'accès, se situant, dans l'exemple ici représenté, sous la selle 4 du scooter. La zone sous la selle 4 est, de manière connue, accessible par basculement de la selle 4.

Afin de permettre une mise en place et un retrait facile de la batterie 2 dans le logement 3, le logement 3 peut se présenter essentiellement sous la forme d'un puits permettant une insertion sensiblement verticale de la batterie dans le logement.

Ainsi, le scooter de la figure 1 est particulièrement bien adapté à un échange rapide de la batterie, par exemple pour remplacer une batterie déchargée par une batterie chargée.

Le remplacement de la batterie 2 sur le scooter 1 consiste ainsi simplement à ouvrir la selle 4, extraire par traction la batterie 2 du logement 3, introduire une nouvelle batterie dans le logement 3, et refermer la selle 4.

Une telle séquence simple et rapide est compatible de l'emploi du scooter dans un réseau de stations d'échange de batteries.

La batterie 2 peut comporter un ensemble de cellules électriques, par exemple de technologies lithium-ion, bien que toute autre technologie de batterie soit envisageable dans le cadre de la présente invention (notamment au plomb, nickel-cadmium, nickel-métal-hydrure, lithium-polymère, lithium-fer-phosphate, aluminium, etc.). La tension nominale de la batterie est adaptée à l'application visée, et peut être à titre d'exemple de 36V, 48V, 60V, 72V, ou toute autre tension appropriée.

La batterie a, dans l'exemple représenté, une forme générale adaptée au logement 3, et comporte une poignée 5 située dans la zone privilégiée de préhension de la batterie, selon la direction d'introduction de la batterie 2 dans le logement 3. Le logement 3 du scooter 1 permettant une introduction sensiblement verticale, la poignée 5 est ménagée sur une face dite supérieure 6 de la batterie.

La batterie présente une forme sensiblement parallélépipédique, s'étendant selon sa direction d'introduction dans le logement 3 du scooter 1, et comportant des arêtes arrondies. Les arêtes arrondies de la batterie facilitent son introduction dans le logement 3 et permettent également de rendre sa manipulation plus agréable et moins contondante pour l'utilisateur.

Bien évidemment, toute autre configuration de batterie est envisageable, notamment toute forme prismatique droite.

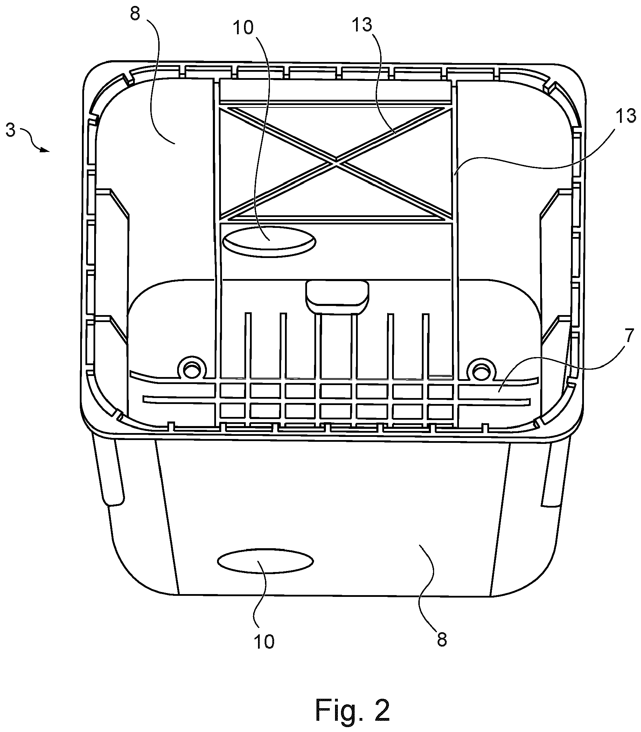

La figure 2 représente un logement 3 de réception de batterie pouvant être utilisé dans un mode de réalisation de l'invention. Le logement de réception de batterie représenté à la figure 2 se présente essentiellement sous la forme d'un bac.

Le logement 3 de réception de batterie comporte donc un fond 7 et des parois latérales 8. Il comporte en outre une face ouverte 9 permettant l'introduction de la batterie dans le logement de réception de batterie.

Le logement de réception de batterie comporte en outre au moins une ouverture d'entrée d'air 10 qui est ménagée dans au moins l'une des parois latérales 8. Il comporte en outre au moins une ouverture de sortie d'air 11 (non visible sur la figure 2) ménagée dans au moins l'une des parois latérales 8. Dans l'exemple ici représenté, le logement de réception de batterie comporte également en partie basse un orifice de passage des câbles de connexion de la batterie.

Le logement de batterie comporte une structure mécanique interne.

Cette structure mécanique interne est configurée de sorte à ménager un espace 12 entre les parois latérales 8 et la batterie 2. Dans l'exemple ici représenté la structure mécanique interne comporte un ensemble de nervures d'espacement 13. Les nervures d'espacement 13 sont essentiellement orientées dans la direction d'introduction de la batterie 2, c'est-à-dire entre la face ouverte 9 et le fond 7 du logement de réception de batterie de sorte à ne pas entraver l'introduction de la batterie dans ledit logement 3 de réception de batterie. La structure mécanique interne peut comporter, en alternative ou en complément aux nervures d'espacement 13, des nervures de renfort 13'. Ces nervures de renfort 13' permettent de rigidifier le bac qui constitue essentiellement le logement de réception de batterie. Les nervures de renfort 13' peuvent avoir diverses orientations. Au moins certaines nervures de renfort 13' ne sont pas orientées selon la direction d'introduction de la batterie. En se croisant, elles peuvent former sur les parois latérales 8 des polygones (tels que des triangles, des hexagones, etc.) ayant pour effet de fortement rigidifier les parois latérales 8. Dans l'exemple représenté, le fond 7 est également nervuré pour augmenter sa solidité et sa rigidité.

L'espace 12 formé entre les parois latérales 8 et la batterie 2 permet une circulation d'air entre la ou les ouvertures d'entrée d'air 10 et la ou les ouvertures de sortie d'air 11. Cette circulation d'air permet un refroidissement de la batterie par évacuation des calories présentes dans le logement de réception.

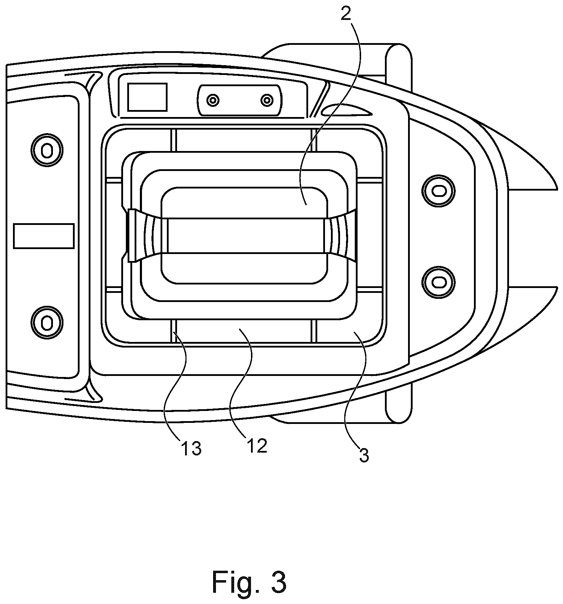

La figure 3 représente selon une vue de dessus un logement de réception de batterie équipant un véhicule conforme à un mode de réalisation de l'invention dans lequel une batterie est mise en place.

La figure 3 illustre en particulier comment les nervures d'espacement 13 permettent, dans l'exemple ici représenté, de centrer la batterie 2 dans le logement 3 de réception tout en ménageant l'espace 12 tout autour de la batterie. Les nervures d'espacement 13 permettent ainsi également de maintenir correctement en position la batterie dans le logement. Elles maintiennent en particulier la batterie 2 en position dans un plan perpendiculaire à sa direction d'introduction dans le logement. Elles maintiennent ainsi la batterie, dans l'exemple représenté, dans un plan qui est parallèle au fond 7 du logement de réception de batterie et à la face ouverte 9.

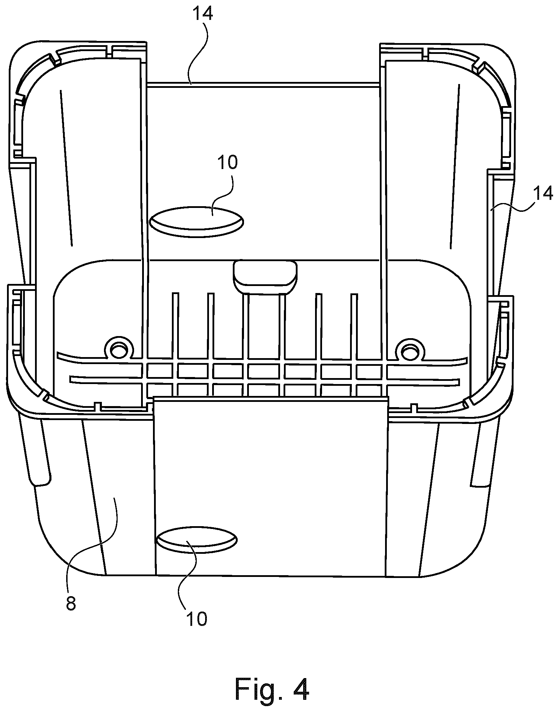

La figure 4 représente selon une vue analogue à celle de la figure 2 un autre exemple de logement de réception de batterie pouvant être mis en oeuvre dans un mode de réalisation de l'invention.

Selon ce mode de réalisation les nervures d'espacement 13 sont remplacées par un ou plusieurs décrochements 14 formés dans les parois latérales 8.

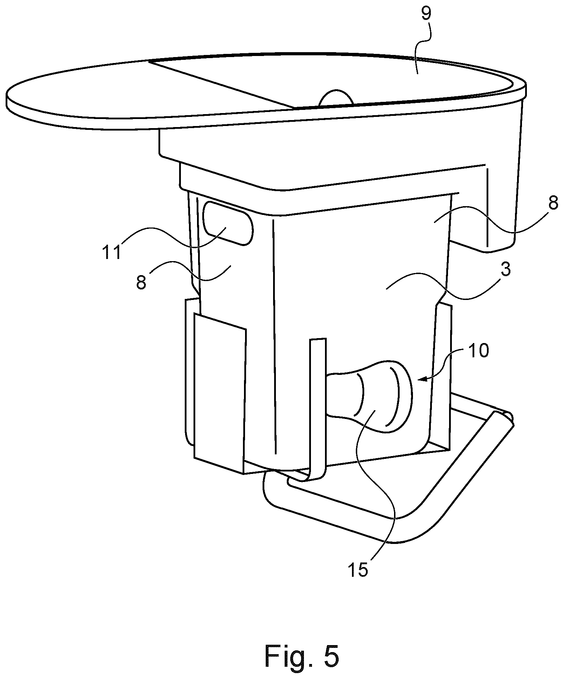

La figure 5 illustre selon une vue tridimensionnelle schématique un logement de réception de batterie et son environnement immédiat dans un véhicule conforme à un mode de réalisation de l'invention. Dans l'exemple représenté à la figure 5, le logement 3 de réception de batterie comporte sur l'une de ses parois latérales situées sur le côté du véhicule équipé une ouverture d'entrée d'air 10.

L'ouverture de sortie d'air 11 est positionnée vers l'arrière (selon la direction d'avancée du véhicule) du logement de réception de batterie.

L'ouverture d'entrée d'air est ici équipée d'une écope 15 permettant de capter un flux d'air qui s'écoule à proximité du logement de réception de batterie, à proximité du logement de réception de batterie.

L'écope 15 peut-être formée en divers matériaux, notamment en métal ou en un matériau plastique. Elle peut être rapportée et fixée sur la paroi extérieure du logement 3 de réception de batterie. L'écope peut être vissée, et/ou collée, ou fixée par tout autre moyen approprié. Alternativement elle peut être formée directement par le logement de réception de batterie, par exemple lors du moulage de ce dernier s'il est réalisé en matériau plastique.

L'écope 15 forme ainsi un système aéraulique adapté à capter tout ou partie d'un flux d'air relatif au véhicule provoqué par le mouvement d'avancée du véhicule et à le forcer vers et au travers de l'ouverture d'entrée d'air 10.

L'air qui pénètre dans le logement 3 de réception de batterie suit alors le parcours ménagé autour de la batterie par la structure mécanique interne du logement de réception de batterie jusqu'à la sortie d'air 11. Lors de son parcours autour de la batterie 2, l'air s'échauffe avant d'être évacué du logement de réception de batterie et de drainer ainsi des calories à l'extérieur dudit logement de réception de batterie.

Le positionnement de l'ouverture de sortie d'air au niveau d'une paroi latérale située à l'arrière du logement de réception de batterie s'avère particulièrement avantageuse pour favoriser l'extraction de l'air dudit logement de réception de batterie, de manière efficace et sans générer de perturbation aérodynamique néfaste pour le véhicule.

On notera que dans l'exemple ici représenté le logement 3 de réception de batterie peut être avantageusement symétrique et qu'il peut ainsi présenter une ouverture d'entrée d'air 10 sur les deux parois latérales opposées situées de part et d'autre du véhicule équipé.

Une ou plusieurs écopes constituent le système aéraulique préféré pouvant être employé dans la présente invention. Néanmoins de nombreux autres systèmes aérauliques permettant la captation d'un flux d'air provoqué par l'avancée du véhicule équipé peuvent être envisagés selon différents modes de réalisation de l'invention. Ces systèmes aérauliques peuvent comporter ou non des écopes et/ou des conduits d'air permettant d'acheminer la part captée du flux d'air vers une ou plusieurs ouvertures d'entrée d'air 10 du logement 3 de réception de batterie.

Afin d'éviter l'entrée d'éléments solides ou liquides dans le logement 3 de réception de batterie, le système aéraulique comporte avantageusement un filtre. Par filtre on entend tout système de filtration adapté à éviter ou à limiter de telles entrées dans le logement de réception de batterie. Le filtre peut ainsi comporter, à titre d'exemples, un ou plusieurs des éléments suivants : grille métallique ou plastique, filtre papier, filtre textile, filtre en mousse, chicanes, etc.

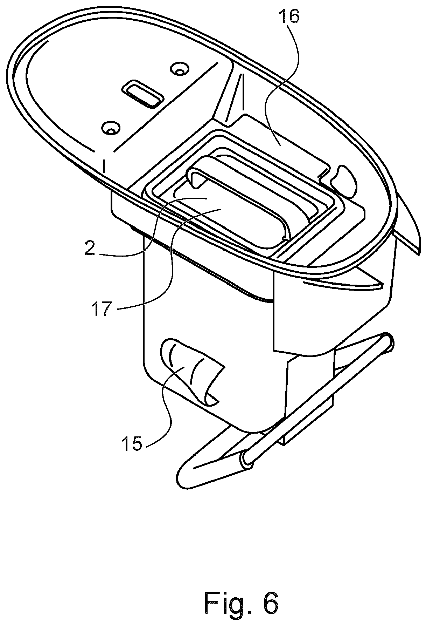

La figure 6 illustre selon une autre vue tridimensionnelle schématique le logement de réception de batterie et son environnement immédiat dans un véhicule conforme à un mode de réalisation de l'invention.

Dans le mode de réalisation représenté à la figure 6, le logement de réception de batterie comporte un couvercle 16. Ce couvercle 16 comporte une ouverture 17 calibrée pour permettre le passage de la batterie 2. En d'autres termes l'ouverture 17 du couvercle 16 a une forme qui correspond à un jeu fonctionnel prêt, à la section transversale de la batterie 2.

Le couvercle 16 du logement de réception de batterie peut également assurer ou à tout le moins jouer un rôle dans le maintien de la batterie en position dans un plan transversal à la direction d'introduction de la batterie dans le logement 3. Ainsi le couvercle 16 peut comporter tout ou partie de la structure mécanique interne au logement 3 de réception de batterie qui assure ce maintien en position de la batterie 2. Pour ce faire, le couvercle 16 peut comporter un rebord qui pénètre plus ou moins en profondeur dans le logement de réception depuis sa face ouverte 9 en direction de son fond 7.

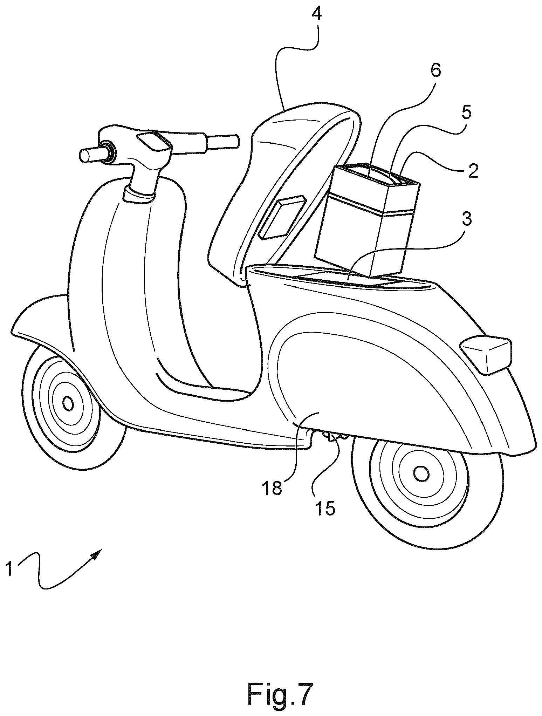

La figure 7 représente un scooter analogue à celui de la figure 1 comportant le dispositif de refroidissement de batterie illustré en référence aux figures 2 à 6.

L'écope 15 et située juste en dessous d'un carter de roue arrière 18 du scooter, voire en partie dans ce carter de roue arrière 18. Ce positionnement de l'écope 15 permet la captation d'un flux d'air à proximité immédiate du logement 3 de réception de batterie. Le système aéraulique mis en œuvre est ainsi particulièrement simple. Ce positionnement permet un refroidissement efficace de la batterie. Ce positionnement ne nécessite aucune modification importante dans la structure d'un scooter 1 destiné à être utilisé dans un réseau d'échange de batterie. Enfin ce positionnement ne dégrade aucunement l'esthétique du véhicule en l'occurrence du scooter 1.

L'invention ainsi développée permet de garantir un refroidissement par air de la batterie de propulsion équipant un scooter, un véhicule à propulsion électrique analogue destiné à être utilisé dans un réseau d'échange de batterie.

Le véhicule proposé dans l'invention et en particulier le dispositif de refroidissement de batterie qui l'équipe est simple à réaliser et à mettre en œuvre. Il est néanmoins suffisamment efficace pour garantir un refroidissement permettant d'éviter de nombreuses situations d'emballement thermique de la batterie. L'invention est tout particulièrement adaptée aux véhicules électriques légers dont la batterie interchangeable par l'utilisateur est située sous la selle du véhicule. La disponibilité du scooter (ou autre véhicule léger électrique) pour son usage est ainsi garantie même après un roulage prolongé à forte charge. La disponibilité du système de freinage régénératif permettant une recharge de la batterie lors des décélérations du véhicule est également maximisée. La dégradation de la batterie sous l'effet de la température est limitée et sa durée de vie est augmentée. Cela est particulièrement important dans un modèle économique fondé sur l'échange de batteries. Dans un tel modèle économique, l'exploitant recherche une durée de vie maximale pour les batteries, et les utilisateurs souhaitent récupérer lors de chaque échange de batterie une batterie chargée et disposant autant que possible de toute sa capacité énergétique nominale.

## Revendications

1. Véhicule léger à propulsion électrique tel qu'un scooter (1), ledit véhicule comportant un logement (3) de réception de batterie pour la réception d'une batterie (2) électrique adaptée à fournir l'énergie nécessaire à la propulsion du véhicule, le véhicule étant configuré de sorte que la batterie (2) est interchangeable par un utilisateur du véhicule,
le logement (3) de réception de batterie comportant une face ouverte (9) permettant l'introduction de la batterie (2) selon une direction d'introduction de la batterie et étant en outre délimité par des parois latérales (8) et une paroi de fond (7),
**caractérisé en ce que** le logement de réception de batterie comporte
- au moins une ouverture d'entrée d'air (10) ménagée dans l'une des parois latérales (8), et
- au moins une ouverture de sortie d'air (11) ménagée dans l'une des parois latérales (8),
et **en ce que** le logement de réception de batterie comporte une structure mécanique interne ménageant un espace (12) permettant l'écoulement d'air entre les parois latérales (8) et une batterie (2) présente dans le logement (3) de réception de batterie depuis l'ouverture d'entrée d'air (10) jusqu'à l'ouverture de sortie d'air (11) tout en maintenant la batterie en position dans le logement (3) de réception de batterie dans un plan perpendiculaire à la direction d'introduction de la batterie.

2. Véhicule selon la revendication 1, dans lequel le logement (3) de réception de batterie est en tout ou partie ménagé sous une selle (4) dudit véhicule.

3. Véhicule selon la revendication 1 ou la revendication 2, dans lequel ladite structure mécanique comporte des nervures d'espacement (13) s'étendant sur au moins l'une des parois latérales (8) du logement (3) de réception de batterie sensiblement selon la direction d'introduction de la batterie.

4. Véhicule selon la revendication 3, dans lequel ladite structure mécanique comporte en outre des nervures de renfort (13') non-parallèles aux nervures d'espacement (13).

5. Véhicule selon la revendication 3 ou la revendication 4, dans lequel les nervures d'espacement (13) et, le cas échéant, les nervures de renfort (13'), définissent un parcours d'écoulement de l'air autour de la batterie depuis l'ouverture d'entrée d'air (10) jusqu'à l'ouverture de sortie d'air (11).

6. Véhicule selon la revendication 1 ou la revendication 2, dans lequel ladite structure mécanique comporte au moins un décrochement (14) formé dans au moins l'une des parois latérales (8) du logement de réception de batterie.

7. Véhicule selon l'une des revendications précédentes, dans lequel le logement de réception (3) de batterie comporte deux ouvertures d'entrée d'air (10) ménagées respectivement dans des parois latérales (8) opposées du logement (3) de réception de batterie.

8. Véhicule selon l'une des revendications précédentes, dans lequel le logement (3) de réception de batterie comporte, sur sa face ouverte (9), un couvercle (16) ménageant une ouverture (17) correspondant, à un jeu fonctionnel près, à une section transversale de la batterie.

9. Véhicule selon la revendication 8, dans lequel le couvercle (16) forme tout ou partie de la structure mécanique.

10. Véhicule selon l'une des revendications précédentes, dans lequel l'ouverture de sortie d'air (11) du logement (3) de réception de batterie est formée au travers d'une des parois latérales situées vers l'arrière, selon une direction d'avancée courante du véhicule.

11. Véhicule selon l'une des revendications précédentes, comportant un système aéraulique configuré pour capter un flux d'air généré par un mouvement d'avancée du véhicule et à le guider au travers de chaque ouverture d'entrée d'air du logement de réception de batterie.

12. Véhicule selon la revendication 11 dans lequel le système aéraulique comporte sur chaque ouverture d'entrée d'air une écope (15).

13. Véhicule selon la revendication 12, dans lequel chaque écope (15) est formée ou rapportée sur une surface extérieure du logement (3) de réception de batterie.

14. Véhicule selon l'une des revendications 11 à 13, dans lequel le système aéraulique comporte au moins un filtre configuré pour empêcher l'entrée de particules ou d'eau dans le logement (3) de réception de la batterie.

15. Véhicule selon l'une des revendications 11 à 14, ledit véhicule étant un scooter comportant un carter de roue arrière (18), le système aéraulique étant ménagé au moins en partie dans ledit carter de roue arrière (18) de sorte à capter un flux d'air s'écoulant sous et/ou dans ledit carter de roue arrière (18) lorsque le véhicule avance.
